# EUROPEAN PATENT APPLICATION

(11) **EP 2 263 989 A1**
(43) Date of publication of application: **22.12.2010**
(21) Application number: 08740186.5
(22) Date of filing: 10.04.2008
(51) Int. Cl.: C04B 35/66, B22D 11/10, C21C 5/44, F27D 1/16

(54) **HOT SPRAY REPAIRING MATERIAL**

(71) Applicant: SHINAGAWA REFRACTORIES CO., LTD., Tokyo 102-0073 (JP)
(72) Inventor: SASAKI, Hisaharu, Tokyo 102-0073 (JP); KOYAMA, Takaaki, Tokyo 102-0073 (JP); KOMATSUBARA, Kiyoyuki, Tokyo 102-0073 (JP)
(74) Representative: HOFFMANN EITLE
(86) International application number: PCT/JP2008/057085
(87) International publication number: WO 2009/125484

(57) **Abstract**

An object of the invention is to provide "a hot gunning repair mix" excellent in peeling resistance and hardenable for a short period of time. The hot gunning repair mix according to the invention is a hot gunning repair mix including a refractory raw material containing 20 to 40% by weight of grains having a size of 75 µm or less and a binder for forming a carbon bond in hot condition, in which a metal powder or an iron alloy powder containing iron (Fe) as a main component and 70% by weight or more of grains having a size of 1.0 mm or less is added in an amount of 5 to 50% by weight based on a total amount of the refractory raw material and the binder.

## Description

### TECHNICAL FIELD

The present invention relates to a hot gunning repair mix applicable to furnace walls, furnace bottoms and the like of steelmaking equipment such as converters, electric furnaces and ladles, and particularly relates to a hot gunning repair mix excellent in short-time hardening and peeling resistance.

### BACKGROUND ART

In order to improve production efficiency, the furnace repairing time in hot condition of furnace walls, furnace bottoms and the like of steelmaking equipment such as converters, electric furnaces and ladles tends to decrease, and the number of repairs is also suppressed. Accordingly, repair mixes having long service life have been desired. Further the reduction of the hardening time after installation and improvement in peeling resistance have come to be required.

Conventionally, as a gunning refractory composition (gunning repair mix) applicable to furnace walls, furnace bottoms and the like of steelmaking equipment such as converters, electric furnaces and ladles, there has been known one in which an inorganic binder such as a phosphate or a silicate is added to a refractory aggregate at a ratio of 3 to 10% by weight.
However, with increasing severity of operating conditions of steelmaking furnaces, a problem of insufficient durability has occurred. The reason for this is considered to be that the inorganic binder forms a low-melting material at the time of heat adhesion to be liable to cause an installed body to contact, resulting in easy peeling. Further, the melting point of matrix is decreased, so that the dissolution is liable to occur. This is also considered to be a cause of a decrease in durability.

Further, there has been known a so-called carbon bond gunning mix to which pitch or a phenol resin is added. However, the hardening time until the pitch of the binder is baked is long compared to the phosphoric acid bond-based gunning mix. Furthermore, it is poor in softness in hot condition because of its carbon bonds, so that it cannot buffer the strain which occurs in a rotating tilting furnace such as the converter, which causes a factor of peeling damage.

In addition, as a repair mix to which metal powder is added, there has also been introduced a converter hot casting repair mix to which iron powder is added (see Patent Document 1). This is aimed to decrease the temperature of an installation surface by adding the iron powder to the hot casting repair mix to improve adhesiveness. It is described that the hot casting repair mix in a powder state at ordinary temperature is slurried by melting of the pitch in hot condition to allow the iron powder to precipitate, resulting in uneven distribution of iron on a boundary with the bottom installation surface, whereby the temperature of the installation surface is decreased to improve adhesiveness.
However, iron is concentrated on an adhesive interface, so that molten steel is liable to leak in an interface between the installed body and the installation surface during refining treatment, which causes the hot casting installed body to peel off. Accordingly, sufficient durability is not obtained.

- Patent Document 1: .: JP-A-11-278948

### DISCLOSURE OF THE INVENTION

### PROBLEMS THAT THE INVENTION IS TO SOLVE

The above-mentioned carbon bond gunning mix has high durability, compared to the phosphate-bonded gunning repair mix, but has problems of (a) the long hardening time and (b) lacking in softness in hot condition to be liable to peel off against the physical strain. That is to say, hardening of the carbon bond gunning mix proceeds from a surface to be heated after gunned or from the installation surface. However, the inside of the installed body is difficult to transmit heat, which tends to cause delay in hardenning. Further, when carbon bonds are once formed, it is difficult to deform, although the strength in hot condition is high. Accordingly, when the strain is applied, peeling is liable to occur.

The invention has been made in view of the above-mentioned problems, and an object of the invention is to provide a hot gunning repair mix excellent in peeling resistance and hardenable for a short period of time, to steelmaking furnace operation.

### MEANS FOR SOLVING THE PROBLEMS

The hot gunning repair mix according to the invention is a hot gunning repair mix including a refractory raw material containing 20 to 40% by weight of grains having a size of 75 µm or less and a binder for forming a carbon bond in hot condition, in which a metal or an iron alloy containing iron (Fe) as a main component is added in an amount of 5 to 50% by weight based on a total amount of the refractory raw material and the binder (claim 1).

Further, the hot gunning repair mix according to the invention is a hot gunning repair mix including a refractory raw material containing 20 to 40% by weight of grains having a size of 75 µm or less and a binder for forming a carbon bond in hot condition, in which a metal powder or an iron alloy powder containing iron (Fe) as a main component and 70% by weight or more of grains having a size of 1.0 mm or less is added in an amount of 5 to 50% by weight based on a total amount of the refractory raw material and the binder (claim 2).

In the hot gunning repair mix according to the invention, the metal powder or the iron alloy powder containing iron as a main component is added in the specific amount (5 to 50% by weight) to the refractory raw material (refractory aggregate) and the binder for forming a carbon bond in hot condition, thereby increasing thermal conductivity to make it easy to transmit heat into the inside of the installed body, which can reduce the hardening time and the repairing time. Further, there are exerted the function and effect that deformability in hot condition and toughness at low temperature increase, because a net-like structure of the metal is formed, thereby resulting in difficulty in peeling off.

### BEST MODE FOR CARRYING OUT THE INVENTION

Embodiments of the invention are described below. Prior to that, the above-mentioned function and effect exerted in the invention are described in further detail with reference to the background art.

The conventional carbon bond gunning mix contains pitch or the like as a binder, as described above, and the binder is melted by applying heat after gunned and adhered. Thereafter, the binder is hardened to form carbon bonds, resulting in strong adhesion. The installed body is also sufficiently high in strength after hardened, and swelling of a slag is difficult to occur by containing carbon. Thus, the installed body having high durability can be obtained.
However, when it is used as the hardening time is not taken and sufficient heat is not transmitted into the inside, the strength decreases to deteriorate durability. Further, the carbon bonds are difficult to creep in hot condition, and cracking easily occurs when the stress is applied. In a furnace rotating in operation such as a converter, there is a possibility that the stress is applied by the strain or the like to cause peeling off.

Compared with this, in the hot gunning repair mix according to the invention, the metal powder (or the iron alloy powder) containing iron as a main component is added to the carbon bond hot gunning repair mix, thereby uniformly dispersing the metal powder containing iron as a main component in the installed body, which can increase thermal conductivity of the installed body and accelerate hardening of the binder.
Further, when heat is applied, the metal powder (or the iron alloy powder) containing iron as a main component are fusion bonded to one another to form a network structure in the installed body. This metal network structure gives stress relaxation ability to the installed body by imparting moderate hot softness at high temperature in operation, and on the decrease in temperature, the breaking strength increases by having toughness, which makes it difficult to bring about cracking or peeling off. Like this, the metal powder (or the iron alloy powder) containing iron as a main component is uniformly added into the installed body to form the network structure of the metal, thereby being able to achieve the reduction of the hardening time and improvement of peeling off during refining treatment as the problems of the carbon bond gunning mix.

For "uniform dispersion and formation of the network structure" of the metal powder (or the iron alloy powder) containing iron as a main component, which are effective for peeling resistance and the reduction of the hardening time,
a. it is necessary to perform gunning installation. When the metal is unevenly distributed as the hot casting repair mix described in the above-mentioned Patent Document 1 (JP-A-11-278948), improvement in thermal conductivity of the whole installed body is not expected, and the reduction of the hardening time cannot be expected. However, the gunning installation method can uniformly disperse the metal powder (or the iron alloy powder) containing iron as a main component in the installed body, so that the thermal conductivity of the installed body is improved. An effect is therefore obtained that the time required until a center portion is baked is shortened, compared with the conventional carbon bond gunning mix.
b. The metal powder (or the iron alloy powder) containing iron as a main component to be added must contain 70% by weight or more of grains having a size of 1.0 mm or less. The reason for this is that only grains coarser than 1.0 mm are liable to be unevenly distributed, so that the thermal conductivity is not improved unless the grains are added in large amounts, and no network structure can also be formed. Further, when the amount of this metal powder (or the iron alloy powder) added is less than 5% by weight, the thermal conductivity is not sufficient, and hardening does not easily proceed to the inside of the installed body. Accordingly, the center portion is liable to become a half-baked state. The effect of short-time hardening can be obtained by adding the metal powder (or the iron alloy powder) in an amount of 5% by weight or more. Furthermore, conversely, when the amount thereof added is too much, a refractory structure is divided into parts to rather cause a decrease in durability. Accordingly, the metal powder (or the iron alloy powder) containing iron as a main component is contained preferably in an amount of 5 to 50% by weight, and more preferably in an amount of 10 to 30% by weight.
c. When the amount of the refractory raw material having a size of 75 µm or less is more than 40% by weight, the above-mentioned network structure of the metal is divided into parts to inhibit the effect. On the other hand, when it is less than 20% by weight, the ratio of the metal is too high, so that the installed body becomes excessively soft in hot condition to cause a decrease in durability.
d. Even when the network structure of the metal is formed, the effect expected is not obtained by oxidation. It is therefore necessary to apply the binder for forming a carbon bond having an effect of reducing the metal powder (or the iron alloy powder) containing iron as a main component.

As the refractory raw material in the invention, there can be used a refractory material or a refractory aggregate which is ordinarily used. For example, there can be used one of molten alumina, sintered alumina, sintered mullite, calcia partially stabilized zirconia, yttria partially stabilized zirconia, chamotte, silicon carbide and the like. Further, a mixture thereof can also be used. In particular, preferred are MgO- or MgO-CaO-based aggregates, for example, basic aggregates such as electromolten magnesia, sintered magnesia clinker, natural magnesia clinker, natural magnesia clinker, natural dolomite clinker, synthetic dolomite clinker, MgO-C brick scrap and dolomite brick scrap.

"The binders for forming a carbon bond in hot condition" in the invention include resins, pitches and the like. In particular, a resol type phenol resin, a phenolformaldehyde-based resin and a high softening point pitch (softening point: 100 to 500°C) are preferably used either alone or in combination of two or more thereof. When pitches different in softening point temperature are combined, the softening point range of the installed body is enlarged, thereby improving the rate of adhesion. This is therefore preferred. The amount thereof added is preferably from 2 to 35% by weight, and more preferably from 8 to 25% by weight, as the total amount.

The metal powder (or the iron alloy powder) containing iron as a main component is usually added for the purpose of preventing oxidation of the carbon bonds or suppressing the temperature of the installation surface, as described in JP-A-11-278948. However, in the present invention, the metal powder (or the iron alloy powder) is added for the purpose of reducing the hardening time immediately after gunning installation by forming the metal or metal alloy three-dimensional network structure in the inside of the installed body to improve softness at high temperature and breaking energy at low temperature, and further to improve the thermal conductivity of the installed body. Accordingly, the amount thereof added is required to be from 5 to 50% by weight on external multiplication, which is larger than in the case of intending prevention of oxidation. Less than 5% by weight results in a failure to form the network structure, whereas exceeding 50% by weight results in a decrease in durability of the installed body. In order to form the network structure and to improve durability, the amount added is more preferably from 10 to 30% by weight. For the kind thereof, mill scale and the like, as well as the iron powder, can also be used. Further, iron alloys such as Fe-Si, Fe-Cr, Fe-Cu, Fe-C, Fe-Ni-Cr, Fe-Mn, Fe-Mn-Si, Fe-Ni, Fe-Al, Fe-Mo and Fe-V can be used.

The metal powders or the alloy powders include powders of aluminum, silicon, aluminum-magnesia alloy, ferrosilicon, iron, magnesia and the like. However, the present invention is **characterized in that** particularly, the metal powder or the iron alloy powder containing iron as a main component is used. The powder containing iron as a main component is effective pricewise, because it can be added in large amounts. When the metal grains contain coarse grains having a size exceeding 1.0 mm in an amount of 30% by weight, the grains are liable to be unevenly distributed in the gunning installed body, so that the thermal conductivity is not improved unless the grains are added in large amounts, and no network structure can also be formed. It is therefore preferred that grains having a size of 1.0 mm or less are contained in an amount of 70% by weight or more.

When the metal powder or the iron alloy powder containing iron as a main component is added in an amount of less than 5%, no network structure can be formed to fail to exhibit sufficient toughness at low temperature and softness at high temperature, resulting in peeling off. Further, the sufficient thermal conductivity cannot be obtained. On the other hand, an amount exceeding 50% by weight results in excessive softness in hot condition to decrease dissolution resistance, which rather causes a decrease in durability. In order to satisfy improvements in durability and thermal conductivity, the amount of the metal powder or the alloy powder added is from 5 to 50% by weight on external multiplication, and preferably from 10 to 30% on external multiplication, based on the total amount of the above-mentioned refractory raw material and the binder for forming carbon bonds in hot condition.

Like this, "the carbon bond hot gunning repair mix including the metal powder or the iron alloy powder containing iron as a main component" of the invention has high peeling resistance and short-time hardening characteristics not seen before, by uniform dispersion of the metal powder or the iron alloy powder containing iron as a main component and formation of the network structure in hot condition according to the oxidation inhibiting effect due to the carbon bond binder and proper addition of the refractory raw material and the metal powder.

In addition to these components, additives such as deflocculants, fibers, clay and silica flower are added to the hot gunning repair mix according to the invention in small amounts, as needed.

The deflocculant is added in order to improve denseness of the structure of the installed body, as needed, and examples thereof include inorganic deflocculants such as sodium hexametaphosphate and sodium silicate, and organic deflocculants such as sodium polyalkylallylsulfonate and polyacrylate salt. The deflocculant is added at a ratio of 0 to 1% by weight, preferably 0.02 to 0.5% by weight, based on the above-mentioned refractory raw material.

The fiber is added for the purpose of preventing sags of a gunned slurry on a perpendicular wall, and examples thereof include inorganic fibers such as alumina fiber and carbon fiber, and organic fibers such as natural fibers such as hemp and organic synthetic fibers. The fiber is added at a ratio of 0 to 0.2% by weight, preferably 0.01 to 0.1% by weight, based on the above-mentioned refractory raw material.

Clay or silica flower is added in order to increase plastic flowability of the gunning mix at the time when water is not dried yet immediately after the gunning mix has been gunned, thereby increasing adhesiveness. Further, it produces a small amount of melt in hot condition, so that it is also effective for oxidation inhibition of the metal. When the amount thereof added is less than 0.2% by weight, the effect of adhesiveness and the effect of melt cannot be expected because the amount is small. Furthermore, when the amount is more than 10% by weight, sintering easily occurs to be liable to cause peeling, because the amount of melt produced is too much. Accordingly, the amount of clay or silica flower added is desirably from 0.2 to 10% by weight.

The hot gunning repair mix according to the invention is gunned on a furnace wall, a furnace bottom or the like of steelmaking equipment by a conventional method, after water is added to a mixture of the respective components described above, and hardened by heating.

### EXAMPLES

The hot gunning repair mix according to the invention will be specifically described below with reference to Examples together with Comparative Examples.
The following Table 1 shows "refractory raw materials (refractory aggregates)" and "the grain size thereof". Incidental, as the finest refractory raw materials, ball milled raw materials were used (see "Ball Milled" in Table 1). Further, Table 2 shows "metal powders or alloy powders" used in the respective Examples and "the grain size thereof".

**Table 1**

| Material | Natural MgO 95% Ball Milled | Name of Raw Natural MgO 95% -1.0 mm | Seawater MgO 95% Ball Milled |
|---|---|---|---|
| Grain Size | | | |
| 75 µm or less (%) | 70 | 5 | 70 |

**Table 2**

| Name of Raw Material | Fe | Fe-FeO | Fe-Si | Si | Al |
|---|---|---|---|---|---|
| Grain Size | (-1.5 mm) | (-1.5 mm) | (-1.5 mm) | (-1.5 mm) | (-1.5 mm) |
| 1.0 mm or less (%) | 90 | 90 | 90 | 90 | 90 |

### (Examples 1 to 16 and Comparative Examples 1 to 5)

Examples 1 to 8 and Comparative Examples 1 to 3 are shown in Table 3, and Examples 9 to 16 and Comparative Examples 4 and 5 are shown in Table 4.

Further, for hot gunning repair mixes obtained in the respective Examples, the following tests were performed, and the test results thereof are described together in Table 3 and Table 4.

### (Gunning Test at 1,300°C)

In order to make a durability comparison in a laboratory, a gunning test in hot condition at 1,300°C was performed. That is to say, 25 kg of the material was placed in a gun, and gunned together with water in a kiln of 1,500°C in which a gunning panel was placed. The rate of adhesion and the fire-extinguishing time of the installed body were measured. Further, the cracking condition at the time of cooling was also observed. They are each shown in Table 3 and Table 4.

### (Corrosion Test)

A corrosion test was performed using converter slag by a rotary drum method, and the results thereof are shown in Table 3 and Table 4 as "the corrosion resistance index".

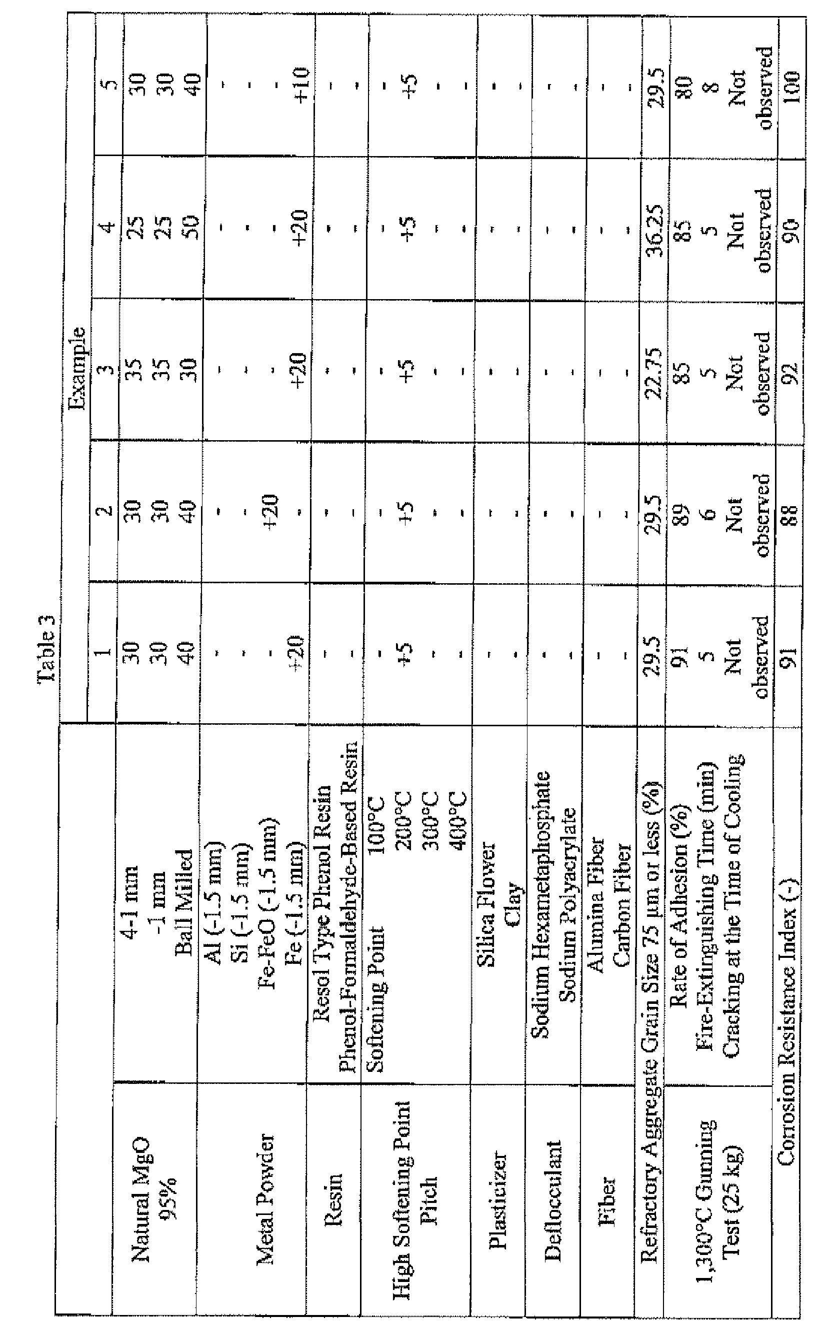

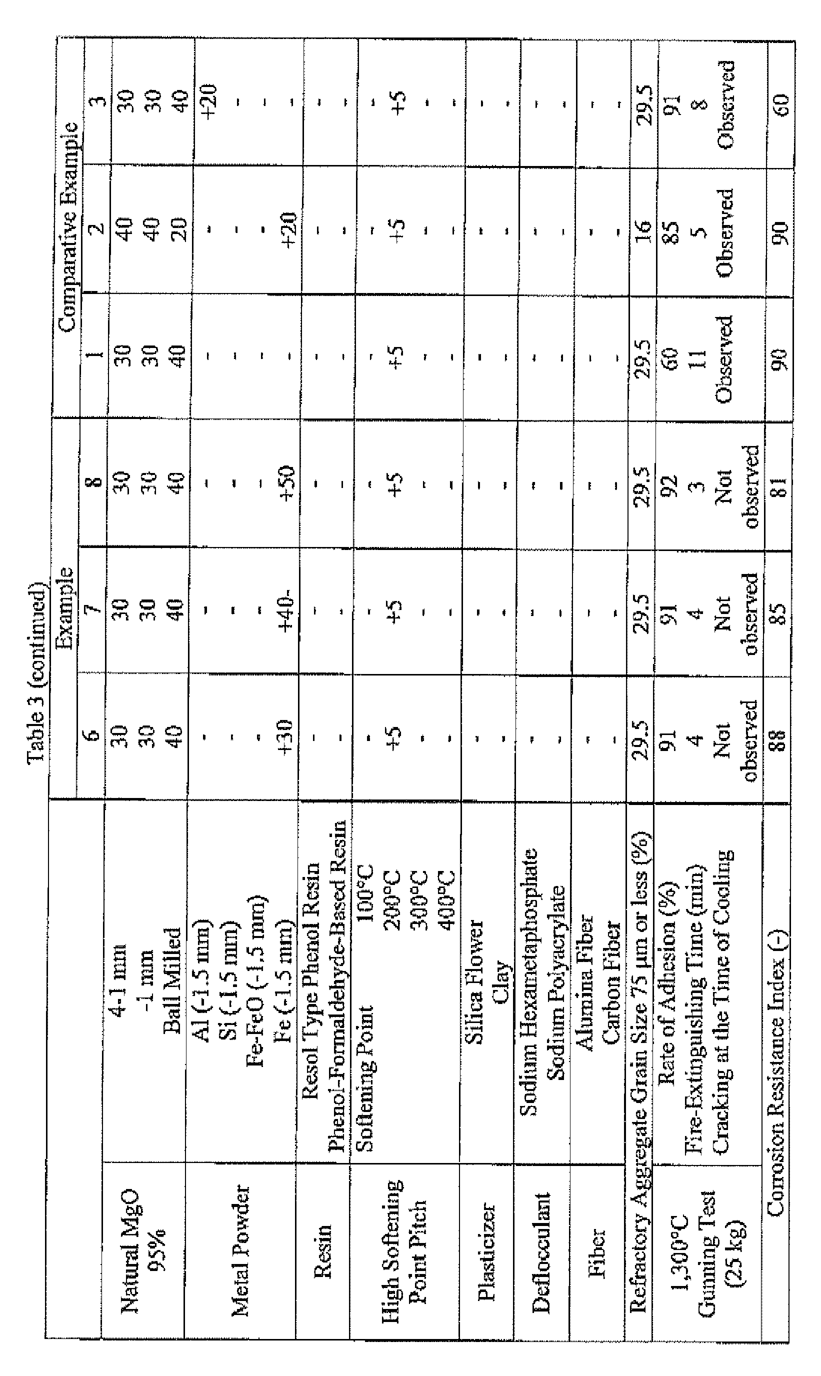

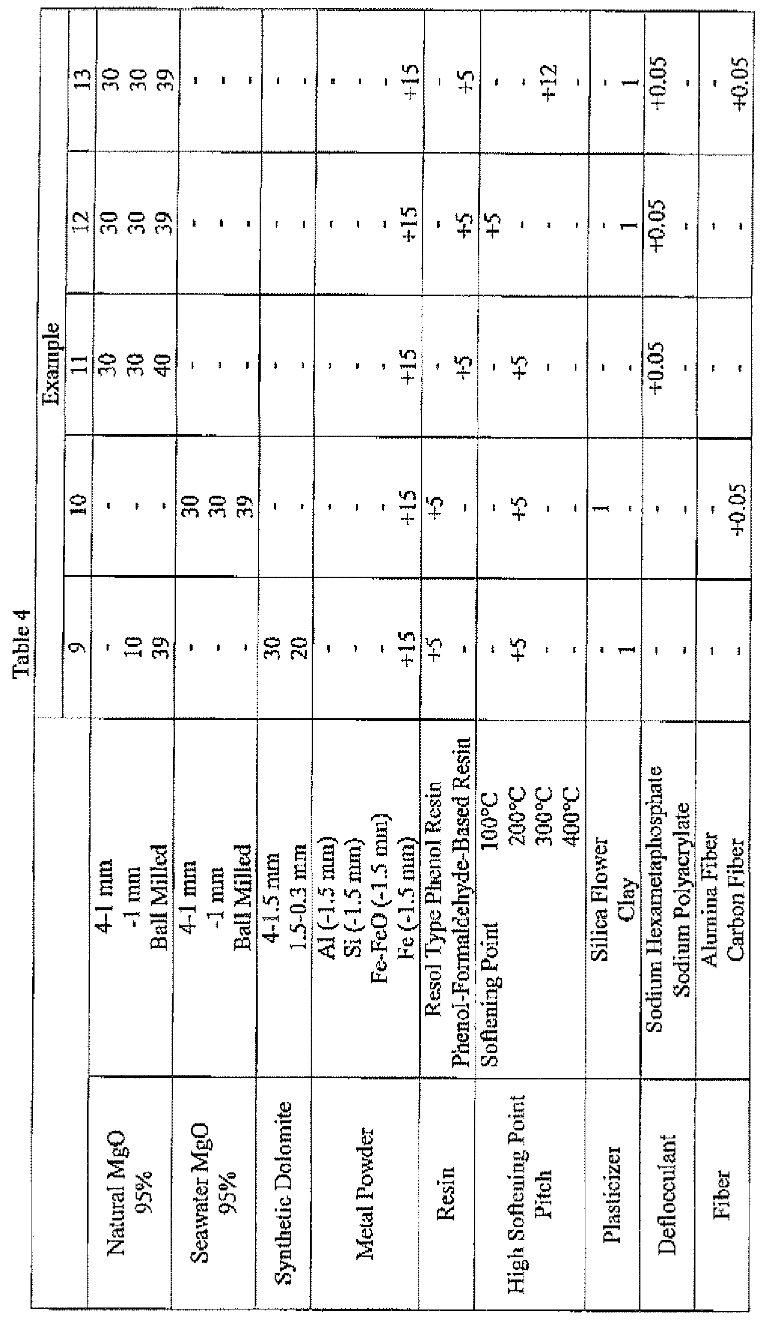

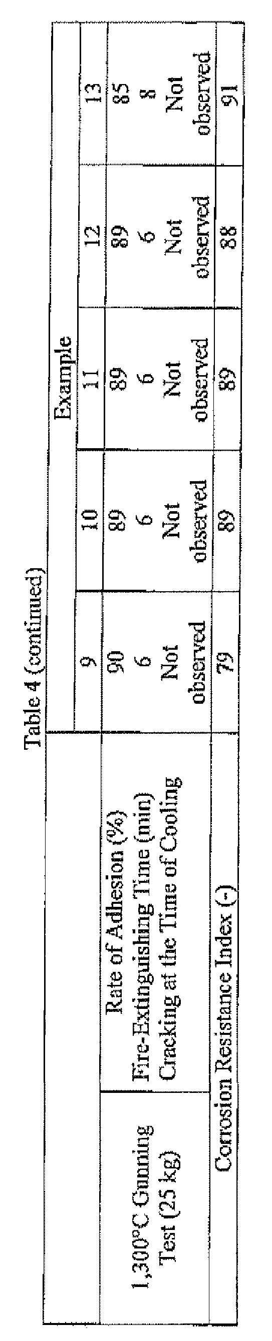

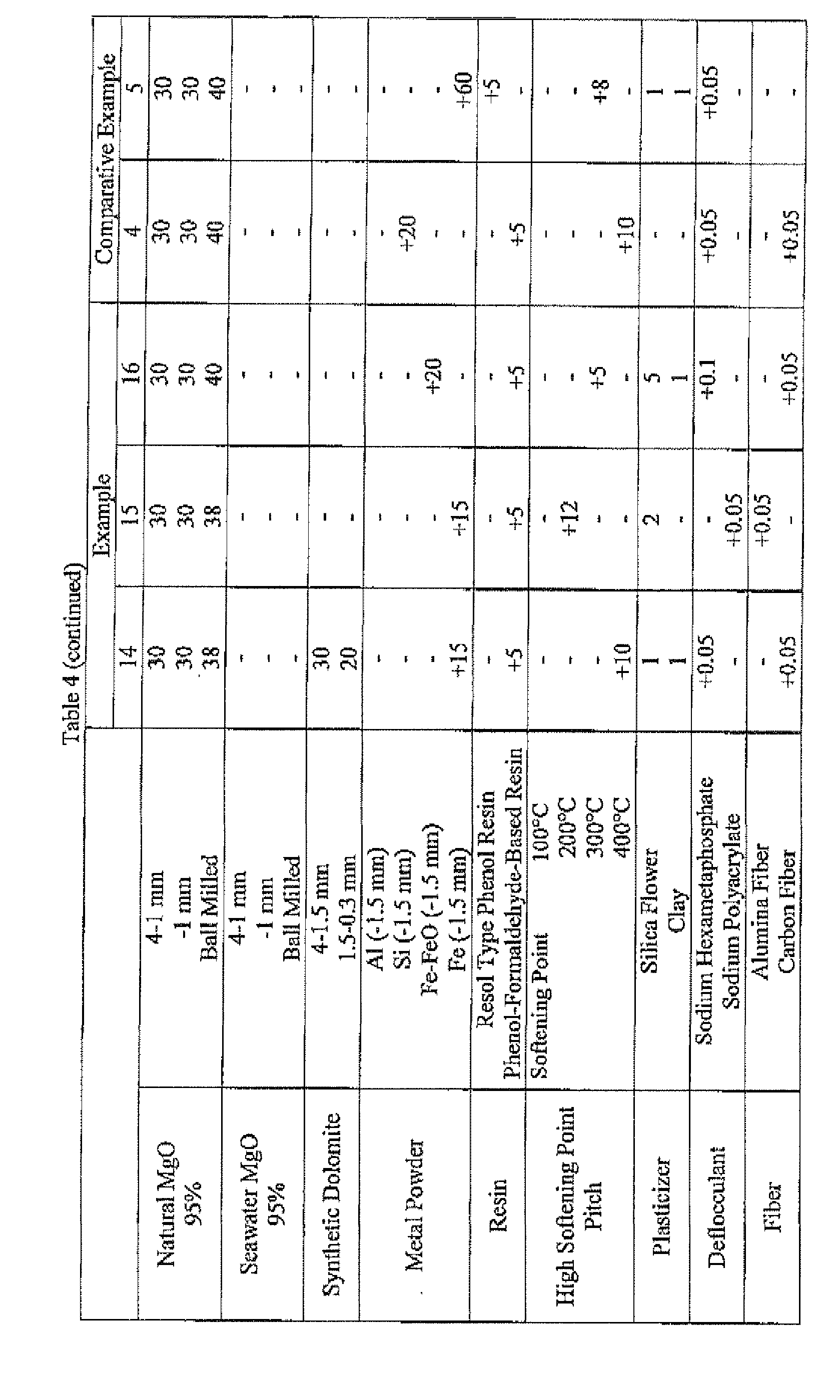

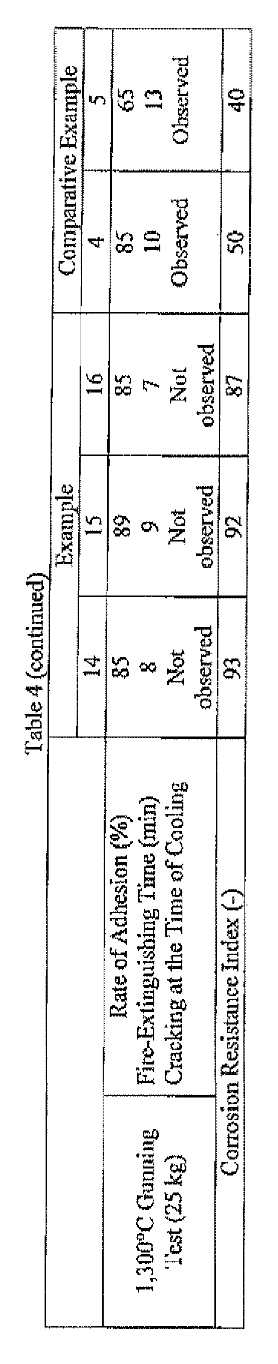

From Table 3, the following items have been able to be confirmed.
Examples 1 to 8 are the results of studying the metal powders containing Fe as a main component, and the fire-extinguishing time is markedly improved compared with Comparative Example 1 in which no metal powder is added. In Comparative Example 3 in which Fe is not contained as a main component (addition of Al powder), oxidation of metal (Al) proceeds, and no cracking inhibiting effect is obtained. Further, also in Comparative Example 2 in which the refractory aggregate containing the grains having a grain size of 75 µm or less in an amount of 16% by weight, which is outside the specific range (20 to 40% by weight) is used, no cracking inhibiting effect is similarly obtained. Examples 1, 5 to 8 show the effect of the amount of Fe added.

From Table 4, the following items have been able to be confirmed.
In Examples 9 to 15, "the kind of refractory aggregate-the amount added", "the kind of resin-the amount added", "the kind of pitch-the amount added", "the kind of plasticizer-the amount added", "the kind of deflocculant-the amount added" and "the kind of fiber-the amount added" are changed. However, "the metal powder containing iron as a main component, specifically, Fe powder" is added in the specific amount (specifically, 15% by weight), whereby cracking is difficult to occur, and the fire-extinguishing time is also short, in all Examples. Further, also in Example 16 (an example in which the iron alloy powder, specifically Fe-Si powder, is added), similarly, cracking is difficult to occur, and the fire-extinguishing time is also short.
On the other hand, in Comparative Example 4, the easily oxidizable metal powder (specifically, Si powder) is used, and in Comparative Example 5, the metal is added too much (specifically, Fe powder is added in an amount of 60% by weight). Accordingly, not only no cracking inhibiting effect is obtained, but also the corrosion resistance decreases.

### INDUSTRIAL APPLICABILITY

In the hot gunning repair mix according to the invention, the effect of reducing the hardening time is seen, and few cracks occur. Accordingly, the reduction of the repairing time and the effect of improving durability are observed, so that applicability thereof is extremely remarkable.

## Claims

1. A hot gunning repair mix comprising a refractory raw material containing 20 to 40% by weight of grains having a size of 75 µm or less and a binder for forming a carbon bond in hot condition, wherein a metal or an iron alloy containing iron (Fe) as a main component is added in an amount of 5 to 50% by weight based on a total amount of the refractory raw material and the binder.

2. A hot gunning repair mix comprising a refractory raw material containing 20 to 40% by weight of grains having a size of 75 µm or less and a binder for forming a carbon bond in hot condition, wherein a metal powder or an iron alloy powder containing iron (Fe) as a main component and 70% by weight or more of grains having a size of 1.0 mm or less is added in an amount of 5 to 50% by weight based on a total amount of the refractory raw material and the binder.
